(19) Europäisches Patentamt
European Patent Office
Office européen des brevets

(11) **EP 4 541 616 A1**

(12) **EUROPEAN PATENT APPLICATION**

(43) Date of publication:
23.04.2025 Bulletin 2025/17

(21) Application number: 24207488.8

(22) Date of filing: 18.10.2024

(51) International Patent Classification (IPC):
**B60J 10/70** (2016.01)

(52) Cooperative Patent Classification (CPC):
**B60J 10/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.10.2023 CN 202311365545

(71) Applicant: Zhejiang Taiyi Auto Parts Co., Ltd.
Ningbo City Zhejiang 315412 (CN)

(72) Inventors:
• CHEN, Lijing
Ningbo City, 315412 (CN)
• CHEN, Jianfeng
Ningbo City, 315412 (CN)
• LAI, Xiaojuan
Ningbo City, 315412 (CN)

(74) Representative: Chung, Hoi Kan
Mandarin IP Limited
7 Cherry Trees
Great Shelford
Cambridge CB22 5XA (GB)

(54) **VEHICLE WINDSHIELD CLAMPING STRIP**

(57)     A vehicle windshield clamping strip includes a strip member and a profiled U-shaped groove, which includes a curved arm, a first straight arm and a second straight arm arranged at respective ends of the curved arm. The inner side of the second straight arm features a smoothly transitioned inclined curve, and the area enclosed by this curve and the first straight arm. The free end of the first straight arm near the second straight arm is provided with an inward protruding part that contacts the locking part of the ventilation cover. A soft rubber profiled member is positioned at the top and inner side of the second straight arm. The integration of the strip member and the profiled U-shaped groove makes the structure of the clamping strip more stable, less prone to deformation and breakage.

**Figure 1**

EP 4 541 616 A1

## Description

## TECHNICAL FIELD

The present invention relates to the field of vehicle accessories, specifically to a vehicle windshield clamping strip.

## BACKGROUND OF THE INVENTION

Currently, clamping strip structures are widely used for the installation and connection of automobile grilles and windshields, providing a better visual matching effect. Traditional clamping strip structures are matched with surrounding parts as follows: a metal framework is set inside the clamping strip, and the grille's locking feet are engaged with the clamping strip through barbs, while the clamping strip is bonded to the windshield using double-sided adhesive tape.

Patent publication No. CN108778808A discloses a profile strip assembly, which includes a profile strip made of a profile material. The profile strip has a first connection area, providing connection to the edge of a vehicle windshield, and a second connection area, connecting to an adjacent cowl cover component of the windshield. The first connection area has at least one unprofiled free surface section, wherein the free surface section faces the edge area of the windshield. At least a part of the free surface section is covered by an adhesive section in the form of double-sided tape, which provides adhesive connection to the edge of the windshield. The free surface section of the first connection area of the profile strip is formed by the surface of an additional element made of metal or by a coating of the additional element.

However, the profile strip in the prior art and its connection structure, such as glass or ventilation covers, have limitations in their fit. During use, the profile strip may cause damage to other components, negatively affecting user experience.

## SUMMARY OF THE INVENTION

To overcome this issue, the present invention provides a vehicle windshield clamping strip that can solve the problem of hard contact between the profile strip and the fitting parts in prior art, which often leads to damage of the fitting parts.

To achieve the above objective, the present invention provides a vehicle windshield clamping strip, including:

a strip member;
a profiled U-shaped groove, provided at one end of the strip member and integrally formed with it; the U-shaped groove includes a curved arm, and a first straight arm and a second straight arm arranged at respective ends of the curved arm; the inner side of the second straight arm is configured with a smooth transition curve that is inclined, and the area enclosed by the smooth transition curve and the first straight arm is used to clamp the ventilation cover; the inner side of the second straight arm is provided with a sharp protrusion; the sharp protrusion faces towards the bottom of the U-shaped groove; the free end of the first straight arm near the second straight arm is provided with an inward protruding part; the protruding part contacts the locking part of the ventilation cover;

a soft rubber profiled member, provided at the top and inner side of the second straight arm to limit the position of the ventilation cover, and fixed on the outer side extending in the direction of the second straight arm's opening; the soft rubber profiled member includes a horizontal body and a bending body; the horizontal body and bending body are integrally formed; wherein the horizontal body is provided at the top of the second straight arm; one bending part of the bending body is connected to the horizontal body, and this bending part is in full contact with the inner side of the second straight arm; the other bending part extends outward from the second straight arm; both bending parts of the bending body are integrally formed; the horizontal body is horizontally placed on top of the second straight arm, and one end of the horizontal body contacts the windshield.

The strip member and the profiled U-shaped groove are integrally formed; the soft rubber profiled member is fixedly connected to one branch of the profiled U-shaped groove, so that the strip member, the profiled U-shaped groove, and the soft rubber profiled member are fixed as one unit during use.

Furthermore, the highest point on the first straight arm serves as the first force point H when the first straight arm is in contact with the ventilation cover; the highest point of the protruding part serves as the second force point I when the first straight arm is in contact with the locking part; the first straight arm is divided into a first curve section, a second curve section, a third curve section, and a fourth straight section according to its shape; a two-dimensional rectangular coordinate system is established with the horizontal line at the bottom of the U-shaped groove as the x-axis and the vertical position of the metal framework in the first straight arm as the y-axis.

The starting point of the first curve section is the first force point H; the endpoint is the external connection point G between the first straight arm and the curved arm; the curve fitting formula for the first curve section HG is: $Y1 = \sin(x + \pi/2) - \log h0(x) + h0$.

The starting point of the second curve section is the first force point H; the endpoint is the second force point I; the curve fitting formula for the second curve section HI is: $Y2 = \cos(x - 2/w) + \log 2(x) + h1$.

The starting point of the third curve section is the second force point I; the endpoint is the connection point J between the protruding part and the second straight arm; the curve fitting formula for the third curve section IJ is: Y3 = tan(x + 5×h0/6) + ln(x) - 3w/2.

The starting point of the fourth straight section is J; the endpoint is the internal connection point F between the first straight arm and the curved arm; the line segment for the fourth straight section JF is defined by the first coordinate point (w/2, 5×h0/6) and the second coordinate point (w/2, (h1-h0)/2).

Wherein, h1 is the vertical length of the first straight arm in its normal state; w is the average thickness of the first straight arm along its extension direction; and h0 is the length of the metal framework within the first straight arm.

Furthermore, the tip of the sharp protrusion serves as the force point D during the engagement of the second straight arm with the locking part; the lowest point of the bending body in an unstressed state serves as the contact starting point E where the second straight arm and the bending body contact; the highest point of the bending body in an unstressed state serves as the contact endpoint K; the abrupt transition of the second straight arm facing the windshield serves as the contact point L between the second straight arm and the windshield; the lowest point on the outer side of the second straight arm serves as the external connection point M between the strip member and the second straight arm; the lowest point on the inner side of the second straight arm serves as the internal connection point A between the curved arm and the second straight arm; the highest point on the inner side of the curved arm serves as the endpoint B of the sixth curve; the highest point of the sharp protrusion near the curved arm serves as the endpoint C of the seventh curve.

The starting point of the fourth curve section is the contact endpoint K; the endpoint is the contact point L between the second straight arm and the windshield; the curve fitting formula for the fourth curve section KL is:

$$Y42 = \cos(x - L0/3) + 3 \times h1/2 + \sqrt[3]{x}$$

The starting point of the fifth curve section is the contact point L; the endpoint is the external connection point M; the curve fitting formula for the fifth curve section LM is: Y5 = tan(x - (L0/3 + w/2)) + 3×h1/2 - p0 + x^{1/2}.

Between the internal connection point A and the force point D, there are sequentially provided a sixth straight section, a seventh curve section, and an eighth curve section; wherein, the sixth straight section AB is the line segment between the third coordinate point (u0 - w/2, 0) and the fourth coordinate point (u0 - w/2, w0); the curve fitting formula for the seventh curve section BC is: Y7 = sin(x - (w + u0)) + 3w0/2 + x^{-1}; the curve fitting formula for the eighth curve section CD is: Y8 = log0.1(x - (w + 3×u0/4)) + w0 + p0/2 + x^3.

Between the force point D and the contact starting point E, there is a ninth curve section; the curve fitting formula for the ninth curve section DE is: Y9 = log2(x - (w + 3×u0/4)) + w0 + p0/2 + x^{1/3}.

Between the contact starting point E and the contact endpoint K, there is a tenth straight section; the linear fitting formula for the tenth straight section EK is: Y10 = p0/u0 × x + h1.

Wherein, p0 is the thickness of the horizontal body; L0 is the total length of the strip member and the profiled U-shaped groove; u0 is the width of the U-shaped region of the profiled U-shaped groove; w0 is the thickness of the curved arm.

Furthermore, the bending part includes a locking part contact section, and the linear fitting formula for the locking part contact section is:

$$S10 = -3 \times h0/2 \times w0 \times u0 \times x + h1$$

Furthermore, the horizontal body includes a glass contact section; the curve fitting formula for the glass contact section is:

$$S20 = \tan(x - L/3) + t1 + t2 + p0/2 \times x$$

Wherein, t1 is the thickness of the strip member; t2 is the thickness of the windshield and the double-sided adhesive.

Furthermore, the contact area of the locking part contact section is positively correlated with the first angle α; the first angle α is the bending angle of the bending body.

Furthermore, the contact area of the glass contact section is negatively correlated with the second angle β; the second angle β is the bending angle between the horizontal body and the vertical connecting part.

Furthermore, the assembly also includes a first soft body; the first soft body is provided on the outer side of the curved arm; the first soft body is a strip-shaped or strip-surfaced structure.

Furthermore, a protruding part is provided on the outer side of the strip member; the protruding part is integrally formed with the strip member.

Furthermore, a buffer part is also provided at the free end of the protruding part; the buffer part has the same thickness as the first soft body.

Furthermore, a metal framework is provided within both the strip member and the profiled U-shaped groove; the metal framework is embedded within the strip member and the profiled U-shaped groove.

Furthermore, the metal framework includes a first framework and a second framework; the first framework is provided in the first straight arm, the curved arm, and the strip member, and is continuous without interruption; the second framework is provided within the second straight arm; the first framework and the second framework are not connected.

Furthermore, the area of the first soft body is smaller than the area of the curved arm.

Furthermore, the hardness of the soft rubber profiled member, the first soft body, and the buffer part is the same, and all are softer than the strip member and the profiled U-shaped groove.

Compared with the prior art, the beneficial effects of the present invention lie in that the strip member and the profiled U-shaped groove are integrally formed, making the structure of the clamping strip more stable, less prone to deformation and detachment. The design of the profiled U-shaped groove allows the clamping strip to adapt to various shapes of windshields, providing excellent sealing and firmness. The smooth transition curve on the inner side of the second straight arm reduces friction and impact, improving the smoothness of the clamping strip and the stability of vehicle operation. The sharp protrusion ensures better retention of the windshield and the ventilation grille, preventing the clamping strip from falling off. The soft rubber profiled member increases the flexibility and cushioning of the clamping strip, reducing the impact during collisions, thereby enhancing passenger comfort and safety. The horizontal body and the bending body allow the soft rubber profiled member to better conform to the shape of the second straight arm, improving the buffering performance of the clamping strip. The protruding part at the free end of the first straight arm ensures better contact with the locking part, enhancing the stability of the clamping strip. The thickness of the first straight arm can be varied to adjust the hardness and elasticity of the clamping strip, making it adaptable to different windshields and locking feet.

Particularly, the first soft body provides additional padding, increasing user comfort, relieving pressure between the curved arm and the body surface, and reducing discomfort. The first soft body acts as a protective layer for the curved arm, preventing damage from external objects or the environment, alleviating the pressure and pain caused by impact or friction. The first soft body offers additional support and stability, keeping the curved arm in the correct position, preventing it from slipping or shifting, and maintaining a stable posture.

Especially, the protruding part serves as an additional layer for the strip member, providing better protection, preventing damage from external objects or the environment, and alleviating pressure and pain caused by impact or friction. The buffer part provides additional cushioning, reducing the impact between the strip member and surrounding objects, minimizing discomfort, and protecting the strip member from damage caused by accidental collisions. The combination of the protruding part and the buffer part offers better comfort, reducing pressure between the strip member and the vehicle body, providing a softer and more comfortable feel.

Particularly, the two force points H and I allow for multi-point force application during the fitting process, increasing force distribution and balance, thus improving the stability and reliability of the assembly. The first straight arm is divided into multiple curved and straight sections based on its shape, giving the straight arm a specific curved profile during the fitting process to meet particular fitting requirements. By providing curve fitting formulas for the first curve section, second curve section, third curve section, and fourth straight section, the shape and changes of the straight arm are more accurately described and controlled, ensuring precise fitting and performance during assembly. By adding multiple connection points on the first straight arm, such as external connection point G, internal connection point F, and connection point J, a more stable and reliable connection is achieved, enhancing the strength and stability of the assembly.

Particularly, through the force point D and multiple contact points, multi-point force application and contact are achieved, increasing force distribution and balance, thus improving the stability and reliability of the fit. The contact curve between the second straight arm and the horizontal body is described as the fourth curve section, while the curve between the second straight arm and the windshield is described as the fifth curve section, giving the straight arm a specific bending shape during the fitting process to meet particular fitting requirements. By providing curve fitting formulas for the fourth curve section, fifth curve section, sixth straight section, seventh curve section, eighth curve section, ninth curve section, and tenth straight section, the shape and changes of the straight arm and fit are more accurately described and controlled, ensuring precise fitting and performance. The sequentially arranged sixth straight section, seventh curve section, and eighth curve section between the connection point A and the force point D, as well as the ninth curve section between the force point D and the contact starting point E, increase the strength and stability of the connection.

Particularly, the linear fitting formula for the locking part contact section allows for a more accurate description and control of the shape and changes of the locking part contact section, ensuring precise fitting and performance during the assembly process. The curve fitting formula for the glass contact section accurately describes and controls the shape and changes of the glass contact section, ensuring precise contact and performance during the assembly process. By adding a locking part contact section on the bending part and a glass contact section on the horizontal body, more stable and reliable contact is achieved, improving the strength and stability of the fit.

## BRIEF DESCRIPTION OF DRAWINGS

Figure 1 is a schematic diagram of the assembly structure of the vehicle windshield clamping strip provided by the embodiment of the present invention;
Figure 2 is a schematic diagram of the curve identification points in the embodiment of the present invention;

Figure 3 is a cross-sectional schematic diagram of the vehicle windshield clamping strip in the embodiment of the present invention;

Figure 4 is a schematic diagram of the structure of the soft rubber profiled member in the embodiment of the present invention;

Figure 5 is a schematic diagram illustrating the labeled variables in the vehicle windshield clamping strip in the embodiment of the present invention;

Figure 6 is a schematic diagram of another structure of the vehicle windshield clamping strip in the embodiment of the present invention.

## DETAILED DESCRIPTION OF THE INVENTION

In order to make the objectives and advantages of the present invention clearer, the invention is further described below in conjunction with embodiments. It should be understood that the specific embodiments described here are merely for the purpose of explaining the present invention and are not intended to limit it.

The preferred embodiments of the present invention are described below with reference to the accompanying drawings. Those skilled in the art should understand that these embodiments are only intended to explain the technical principles of the present invention and are not meant to limit the scope of protection of the invention.

It should be noted that, in the description of the present invention, terms such as "upper," "lower," "left," "right," "inner," "outer," and the like indicating directions or positional relationships are based on the directions or positional relationships shown in the drawings. These are merely for convenience of description and are not intended to indicate or imply that the device or element must have a specific orientation or be constructed and operated in a specific orientation. Therefore, these terms should not be construed as limiting the present invention.

In addition, it should be noted that, unless otherwise expressly specified and defined, the terms "install," "connect," and "link" should be understood in a broad sense. For example, they may refer to fixed connections, detachable connections, or integral connections; they may be mechanical connections or electrical connections; they may refer to direct connections or indirect connections through an intermediary medium, and they may refer to the internal communication between two components. Those skilled in the art should understand the specific meanings of these terms in the context of the present invention according to specific situations.

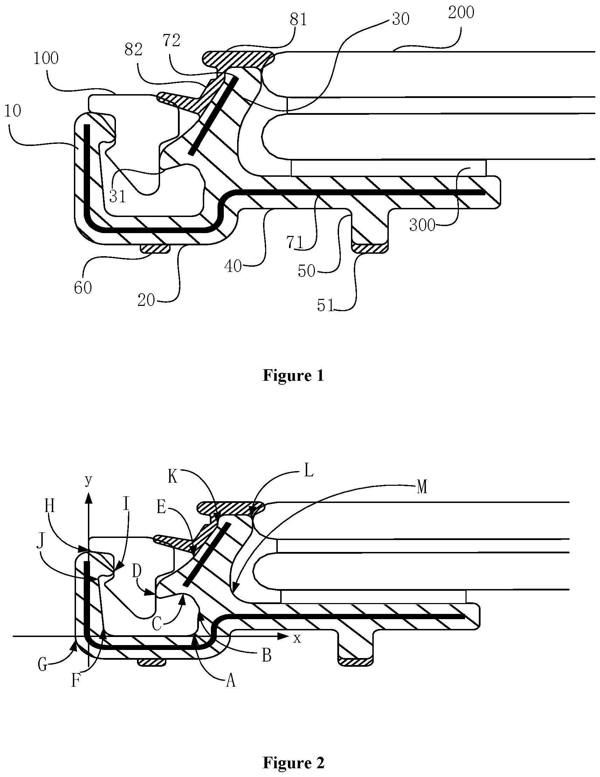

Referring to Figures 1-5, the vehicle windshield clamping strip provided in the embodiment of the present invention includes a strip member 40, a profiled U-shaped groove, and a soft rubber profiled member. The strip member 40 and the profiled U-shaped groove are integrally formed. The soft rubber profiled member is fixedly connected to one branch of the profiled U-shaped groove, so that the strip member 40, the profiled U-shaped groove, and the soft rubber profiled member are fixed as one unit during use.

Continuing with reference to Figure 1, the profiled U-shaped groove in this embodiment includes a curved arm 20, a first straight arm 10, and a second straight arm 30, which are arranged at respective ends of the curved arm. The inner side of the second straight arm 30 features a smoothly transitioned inclined curve, and the profiled U-shaped groove extends outward in the direction of the opening of the second straight arm, so that one side of the outward extension can be fixed with the soft rubber profiled member. The area enclosed by the smoothly transitioned curve between the second straight arm 30 and the first straight arm 10 is used to clamp the ventilation cover 100. A sharp protrusion 31 is provided on the inner side of the second straight arm, facing towards the bottom of the profiled U-shaped groove. The free end of the first straight arm 10 near the second straight arm is equipped with an inward protruding part, which contacts the locking part of the ventilation cover. In this embodiment, the first straight arm is structured as a cuboid with a cross-section that gradually narrows from the fixed end to the free end, made of an elastic material. The thickness of the first straight arm can vary during use to provide a cushioning and shock-absorbing effect during vibrations.

Continuing with reference to Figure 1, the soft rubber profiled member is provided at the top and inner side of the second straight arm to limit the position of the ventilation cover. The soft rubber profiled member includes a horizontal body 81 and a bending body 82, which are integrally formed. The horizontal body is positioned at the top of the second straight arm 30, with one of the bending parts of the bending body connected to the horizontal body and fully contacting the inner side of the second straight arm. The main body of the other bending part extends outward from the second straight arm, with both bending parts of the bending body being integrally formed.

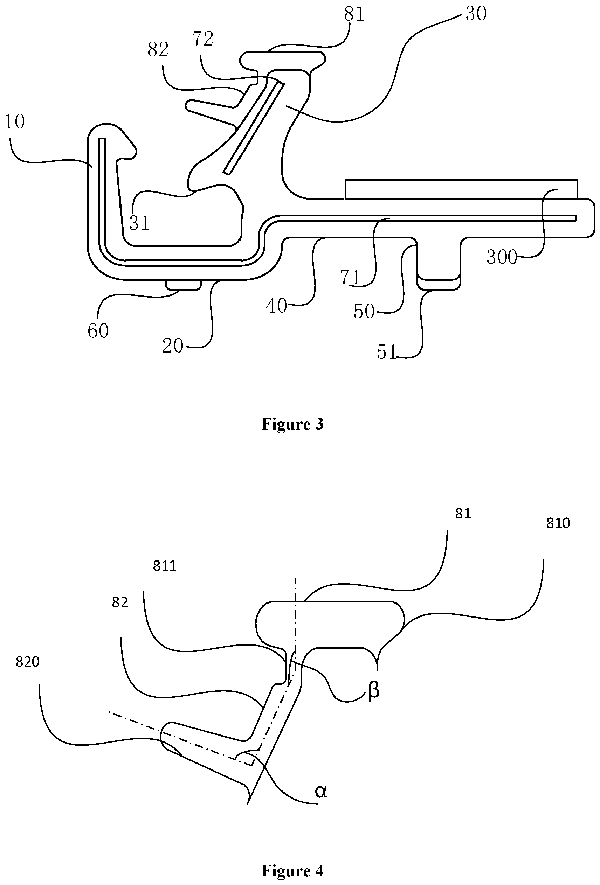

Please continue with reference to Figure 4. In the soft rubber profiled member, the horizontal body 81 is horizontally positioned at the top of the second straight arm. One end 810 of the horizontal body contacts the windshield. Due to the soft rubber material of the horizontal body, it can fit well with the windshield, greatly reducing the wear on the windshield and thereby extending the service life of the windshield when used in conjunction with the vehicle windshield clamping strip. Additionally, the other bending part 820 of the bending body extends outward from the second straight arm and contacts the ventilation cover. Once the locking part of the ventilation cover is inserted into the profiled U-shaped groove, the other bending part of the bending body ensures that the locking part of the ventilation cover does not easily disengage from the profiled U-shaped groove.

Continuing with reference to Figure 4, the horizontal body 81 in the soft rubber profiled member of this embodiment also includes a vertical connecting part 811 that is perpendicularly connected to the horizontal body. The vertical connecting part 811 smoothly transitions into one of the bending parts of the bending body, achieving an effective connection between the horizontal body and the bending part, thereby forming the soft rubber profiled member. This structure ensures a stable connection, simplifies processing, and enhances production efficiency.

Continuing with reference to Figure 1, one side of the strip member 40 is fixed to the vehicle windshield 200 using double-sided adhesive. The strip member 40 extends outward from the intersection of the curved arm 20 and the second straight arm 30 of the profiled U-shaped groove. The strip member 40 is arranged parallel to the curved arm 20, with the vehicle windshield 200 positioned within the area enclosed by the second straight arm 30.

Specifically, the vehicle windshield clamping strip in this embodiment is installed on the lower edge of the windshield. This clamping strip is used to connect structural components to the vehicle windshield 200. The windshield is typically pre-installed with the clamping strip and is fixedly embedded, preferably adhered to the vehicle body. The structural components can be a ventilation grille or a ventilation cover 100, forming a sealed and stable connection, which can also be disengaged when needed.

Specifically, one side of the strip member in this embodiment of the invention is used for fixation to the vehicle windshield using double-sided adhesive. In practical applications, the double-sided adhesive can be solid glue or double-sided adhesive tape. The length of the adhesive can be selected and adjusted according to the area of the vehicle windshield and the adhesive strength of the tape, without limitation, and based on practical implementation. In this embodiment, the ventilation cover is equipped with locking feet. During the fitting process, the locking feet of the ventilation cover snap into the profiled U-shaped groove. The protrusion on the locking part engages with the protruding part, effectively ensuring that the movement of the ventilation cover caused by vehicle operation is accommodated, enhancing the compatibility between the ventilation cover and the clamping strip. Additionally, the soft rubber profiled member on the top and inner side of the second straight arm effectively limits the movement of the locking feet, preventing easy disengagement from the profiled U-shaped groove. When an outward pulling force is applied to the locking part, the protruding part causes the first straight arm to elongate, thinning the first straight arm under the pulling force. However, the soft rubber profiled member limits the pulling stroke, allowing the locking part to rebound, increasing the depth of the insertion into the profiled U-shaped groove. This compression of the first straight arm, under the limiting effect of the soft rubber profiled member, increases its actual thickness. The variable thickness of the first straight arm in this embodiment allows for efficient adaptation to the motion of the locking part. The combined action of the protruding part on the first straight arm and the soft rubber profiled member ensures the stability of the locking part within the profiled U-shaped groove during vehicle operation, preventing disengagement and avoiding noise from rigid contact between the ventilation cover and the profiled U-shaped groove.

Specifically, in this embodiment, the integral formation of the strip member and the profiled U-shaped groove makes the structure of the clamping strip more stable, reducing the risk of deformation and detachment. The design of the profiled U-shaped groove allows the clamping strip to adapt to various shapes of windshields, providing excellent sealing and durability. The smooth transition curve on the inner side of the second straight arm reduces friction and impact, enhancing the smoothness of the clamping strip and the stability of vehicle operation. The sharp protrusion ensures a better grip on the windshield and ventilation grille, preventing the clamping strip from falling off. The design of the soft rubber profiled member increases the flexibility and cushioning of the clamping strip, reducing the impact during collisions and enhancing passenger comfort and safety. The horizontal body and bending body allow the soft rubber profiled member to better adapt to the shape of the second straight arm, improving the cushioning performance of the clamping strip. The protruding part at the free end of the first straight arm ensures better contact with the locking part, enhancing the stability of the clamping strip. The variable thickness of the first straight arm allows for adjustments in the hardness and elasticity of the clamping strip to adapt to different windshields and locking feet.

Specifically, the vehicle windshield clamping strip in this embodiment of the invention further includes a first soft body 60, which is strip-shaped and is provided on the outer side of the curved arm. The length of the first soft body corresponds to the length of the curved arm.

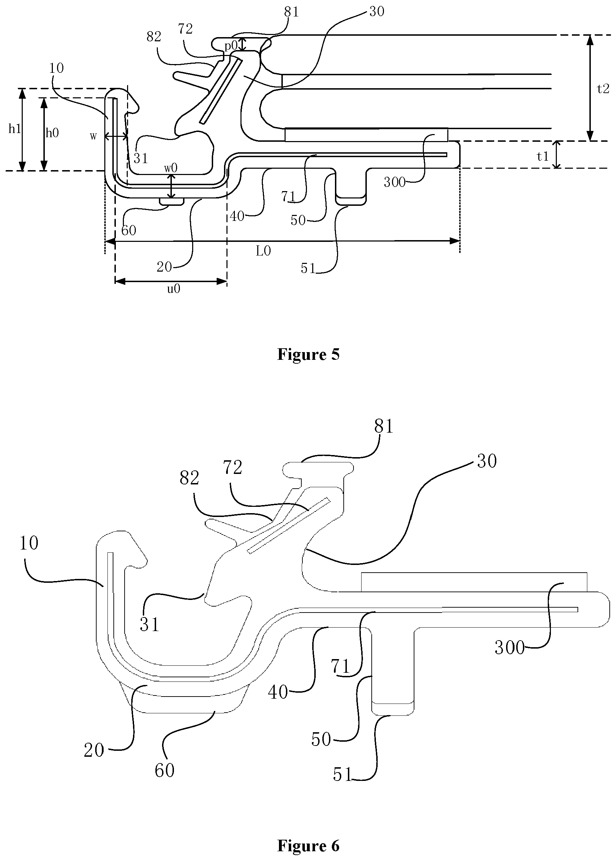

Specifically, in this embodiment, the material of the first soft body can be rubber, and its shape can be strip-shaped or can fully cover the curved arm 20, as shown in Figure 6. This provides effective cushioning when the curved arm contacts the vehicle body component, ensuring soft contact between the clamping strip and the vehicle body, extending the service life of the clamping strip, and protecting the vehicle body components from damage.

Specifically, when the first soft body is in the form of a strip surface, it covers the outer surface of the curved arm, and its coverage length matches the length of the curved arm. As shown in Figure 6, the first soft body is smoothly arranged on the curved arm. In this embodiment, the strip surface design increases the contact area between the first soft body and the vehicle body, significantly increasing the friction, which prevents the clamping strip from moving relative to the vehicle body, thereby enhancing the stability of the clamping strip and extending its service life.

Specifically, in this embodiment, the first soft body 60 provides additional cushioning, increasing flexible contact during vehicle operation, effectively preventing abnormal noise, and relieving pressure between the curved arm and the vehicle body. The first soft body 60 acts as a protective layer for the curved arm, preventing damage from external objects or the environment, reducing the pressure and wear caused by impacts or friction. The first soft body 60 provides extra support and stability, keeping the curved arm in the correct position, preventing it from sliding or moving, maintaining stability, and reducing wear.

Continuing with reference to Figures 1 and 3, a protruding part 50 is provided on the outer side of the strip member. The protruding part is integrally formed with the strip member, and a buffer part 51 is also provided on the protruding part.

Specifically, in this embodiment, the protruding part 50 is flush with the bottom of the curved arm. The thickness of the buffer part 51 is the same as that of the first soft body 60, which is arranged on the outer side of the curved arm. The buffer part in this embodiment can prevent hard contact between the protruding part and the vehicle body, reduce the force exerted by the strip member, and enable soft contact between the strip member and the vehicle body, thus extending the service life of the clamping strip in this embodiment. The combination of the buffer part and the first soft body ensures that two points of the clamping strip are fixed to the vehicle body, preventing lateral movement of the clamping strip and facilitating the insertion of the locking part into the profiled U-shaped groove under stable conditions, thereby improving assembly efficiency.

Specifically, in this embodiment, the protruding part 50 serves as an additional layer for the strip member, providing better protection against damage from external objects or the environment, and reducing the pressure caused by impacts or friction. The buffer part 51 provides additional cushioning, reducing the impact of contact between the strip member and surrounding objects, minimizing discomfort, and protecting the strip member from damage caused by accidental collisions or impacts. The combination of the protruding part 50 and the buffer part 51 ensures better compatibility, reducing pressure between the strip member and the vehicle body, and offering a softer and more comfortable feel.

Specifically, in this embodiment, both the strip member and the profiled U-shaped groove of the clamping strip are equipped with a metal framework. The metal framework is embedded within the clamping strip. The metal framework strengthens the supporting force of the clamping strip, making it less prone to damage and extending its service life. It should be understood by those skilled in the art that, in addition to using a metal framework, alloy frameworks or other frameworks with a certain hardness can also be used as support. The material of the clamping strip can be rigid PVC (Polyvinyl Chloride) or PP (Polypropylene).

Specifically, the incorporation of a metal framework in this embodiment significantly enhances the supporting strength of the clamping strip, preventing it from bending or deforming during use, ensuring that the clamping strip can effectively support and secure the target object. The presence of the metal framework makes the clamping strip sturdier and more durable, resisting external impacts and pressure, thereby reducing the risk of damage to the clamping strip and extending its service life. The metal framework provides additional stability, ensuring that the clamping strip maintains its shape and position during use, preventing it from loosening or detaching due to external forces or vibrations, thus improving the reliability and performance of the clamping strip.

Referring to Figures 2 and 5, during the engagement process with the locking part, the first straight arm 10 is configured with a first force point H and a second force point I. The highest point on the first straight arm 10, which serves as the contact point during its engagement with the ventilation cover, is designated as the first force point H. The first straight arm is divided into a first curve section, a second curve section, a third curve section, and a fourth straight section based on its shape. The starting point of the first curve section is the highest point on the first straight arm 10, and its endpoint is the external connection point G between the first straight arm and the curved arm. The external connection point is the lowest point on the outer side of the non-free end of the first straight arm. The starting point of the second curve section is the first force point H, and its endpoint is the second force point I, which is the highest point of the protruding part. The starting point of the third curve section is the second force point I, and its endpoint is the connection point J between the protruding part and the second straight arm. The connection point J is the highest point of the straight segment of the first straight arm. The starting point of the fourth straight section is the connection point J, and its endpoint is the internal connection point F between the first straight arm and the curved arm. The internal connection point is the lowest point on the inner side of the straight segment of the first straight arm. In this embodiment, the x-axis is established along the horizontal line at the bottom of the profiled U-shaped groove, and the y-axis is established at the vertical position of the metal framework within the first straight arm, as shown in Figure 2.

Continuing with reference to Figures 2 and 5, the curve fitting formula for the first curve section HG is: $Y1 = \sin(x + \pi/2) - \log h0(x) + h0$, where h0 is the length of the metal framework within the first straight arm.

Specifically, the first curve section HG is located on the outer surface of the first straight arm. When the length of the metal framework inside the first straight arm changes, it affects the highest point on the first straight arm. If the metal framework lengthens, the highest point of the first straight arm increases; otherwise, the highest point decreases. Those skilled in the art understand that the length of the metal framework inside the first straight arm influences the length of the first straight arm, thereby affecting the position of the highest point. As the shape of the first curve section lowers, in this embodiment, the first curve section is derived by horizontally and vertically shifting a sine function and then negatively superimposing a logarithmic function onto the sine function, narrowing the shape of the first curve section. A portion of this curve is then selected to form the first curve section. In this embodiment, the logarithmic function has a base of $h_0$, and x is the real number with a range of $(-2w/3, w/2)$. The vertical value range of the first curve section $Y_1$ is $(-w_0/2, a_0 + h_0)$.

The curve fitting formula for the second curve section HI is: $Y_2 = \cos(x - 2/w) + \log_2(x) + h_1$, where $h_1$ is the vertical length of the first straight arm in its normal state, and w is the average thickness of the first straight arm along its extension direction, which corresponds to the thickness at the $h\ 1/2$ position.

Specifically, in this embodiment, during the process of contact between the second curve section and the locking part of the ventilation cover, when the locking part is pressed into the profiled U-shaped groove, the first straight arm is in a compressed state under the pressure of the ventilation cover. Due to the elasticity of the first straight arm, its average thickness increases, thereby increasing the contact area between the first straight arm and the ventilation cover. This effectively reduces the pressure exerted by the ventilation cover, ensuring a more even distribution of force on the first straight arm.

Specifically, in this embodiment, the second curve section is fitted to its actual shape using a cosine function, with a logarithmic function adjusting the flatness of the cosine function. Based on the established coordinate system, the second curve section's shape is fitted by horizontally and vertically shifting the cosine function, and the logarithmic function is used to adjust it, making the cosine curve flatter and more aligned with the shape of the second curve section during operation. In practical applications, the greater the average thickness of the first straight arm, the larger the overall thickness of the first straight arm, and thus, the extension length of the second curve section increases. In other words, the average thickness of the first straight arm is positively correlated with the extension length of the second curve section. When the length of the first straight arm changes, the second curve section will also change accordingly in the vertical direction. It is understood by those skilled in the art that in this embodiment, by fitting the actual shape with a cosine function and adjusting the amplitude with a logarithmic function, the shape of the second curve section is more precisely fitted, meeting practical usage needs, reducing wear during use, and extending the service life.

The curve fitting formula for the third curve section IJ is: $Y_3 = \tan(x + 5 \times h_0/6) + \ln(x) - 3w/2$.

Specifically, in this embodiment, the second force point I in the third curve section will shift position with the movement of the locking part of the ventilation cover, causing the shape of the second curve section to change as the length of the first straight arm varies. When the second force point shifts downward, it indicates that the ventilation cover is moving towards the position of the curved arm during vibrations. At this time, the length of the third curve section shortens, resulting in a sharper angle between the protruding part and the first straight arm, creating a tighter fit between the locking part of the ventilation cover and the first straight arm, effectively securing the ventilation cover to the first straight arm and improving the stability of the connection.

Specifically, in this embodiment, the third curve section is fitted using a tangent function, and its shape is corrected with a logarithmic function, so that the combined shape more closely matches the deformation state of the protruding part under external forces during use. When the average length of the first straight arm increases, the third curve section becomes shorter; conversely, as the length of the metal framework increases, the vertical length of the third curve section also increases, demonstrating a positive correlation with the length of the metal framework and a negative correlation with the average length of the first straight arm. This ensures that the third curve section fully aligns with the operational state in practical applications, reducing wear on the protruding part of the first straight arm during use and extending its service life.

The fourth straight section JF is the line segment connecting the first coordinate point $(w/2, 5 \times h_0/6)$ and the second coordinate point $(w/2, (h_1-h_0)/2)$.

Specifically, in this embodiment, the fourth straight section is part of the first straight arm. The horizontal coordinates of the curve fitting for this section are related to the average thickness of the first straight arm, while the vertical coordinates of the start and end points are related to the height of the first straight arm in its normal state and the length of the metal framework within the first straight arm. By using the height of the first straight arm and the length of the metal framework to define the shape of the fourth straight section, this embodiment ensures that different clamping strips can be adapted to different straight sections, achieving precise fitting of the fourth straight section and improving fitting accuracy.

Specifically, in this embodiment, by setting two force points H and I, multi-point force application can be achieved during the fitting process, increasing force distribution and balance, thereby improving the stability and reliability of the assembly. The first straight arm is divided into multiple curve sections and straight sections based on its shape, giving the first straight arm a specific curved profile during assembly to meet specific fitting requirements. By providing curve fitting formulas for the first curve section, second curve section, third curve section, and fourth straight section, the shape and variations of the first straight arm can be more accurately described and controlled, ensuring precise fitting and performance during the assembly process. Additionally, by adding multiple connection points to the first straight arm, such as the external connection point G, internal connection point F, and connection point J, a more stable and reliable connection is achieved, improving the strength and stability of the assembly.

Continuing with reference to Figure 2, during the engagement process between the second straight arm and the locking part, a force point is set at the tip of the sharp protrusion 31, designated as point D. The contact starting point between the second straight arm and the bending body is set as point E. The contact starting point E is the lowest point of the bending body in an unstressed state, while the contact endpoint is set as point K, which is the highest point of the bending body in an unstressed state. The contact curve between the second straight arm and the horizontal body is designated as the fourth curve section. The starting point of the fourth curve section is K, and the endpoint is the contact point L between the second straight arm and the windshield. This contact point L is located at the sharp transition of the second straight arm facing the windshield. The external connection point between the strip member and the second straight arm is designated as point M, which is the lowest point on the outer side of the second straight arm. The internal connection point between the curved arm and the second straight arm is designated as point A, which is the lowest point on the inner side of the second straight arm. Between the connection point A and the force point D, there are sequentially arranged a sixth straight section, a seventh curve section, and an eighth curve section. The starting point of the sixth curve section is the internal connection point A, and the endpoint B is the highest point on the inner side of the curved arm. The starting point of the seventh curve section is at the highest point, and its endpoint C is the highest point of the sharp protrusion near the curved arm. Between the force point D and the contact starting point E, there is a ninth curve section. Between the contact starting point E and the contact endpoint K, there is a tenth straight section. Finally, between the contact point L and the external connection point M, there is a fifth curve section.

The curve fitting formula for the fourth curve section KL is: $Y42 = \cos(x - L0/3) + 3 \times h1/2 + \sqrt[3]{x}$, where L0 is the total length of the strip member and the profiled U-shaped groove.

Specifically, in this embodiment, the fourth curve section is part of the second straight arm. The fourth curve section is represented using a cosine function, and the value range of the correction function a2 is applied. Additionally, the original cosine function is inverted relative to the x-axis to make the fitted shape more consistent with the curve formed by the engagement between the second straight arm and the horizontal body, ensuring that the fit between the second straight arm and the horizontal body is more precise and efficient.

The curve fitting formula for the fifth curve section LM is: $Y5 = \tan(x - (L0/3 + w/2)) + 3 \times h1/2 - p0 + x^{1/2}$, where p0 is the thickness of the horizontal body.

Specifically, the fifth curve section in this embodiment is fitted using a tangent function combined with a square root function. During practical application, the vehicle windshield may experience translational movement under the influence of vibration, exerting force on the second straight arm. In such cases, the force exerted on the second straight arm increases as a result of the translational force affecting the fifth curve section. The soft rubber profiled member on the second straight arm will engage in soft contact with the vehicle windshield, absorbing the force generated by the windshield's movement, thereby reducing wear on the second straight arm and extending its service life.

Specifically, the fifth curve section is part of the second straight arm. It is precisely fitted using a tangent function with horizontal and vertical translations. In this embodiment, as the thickness of the horizontal body increases, the vertical stretch of the fifth curve section shortens, making the shape of the fifth curve section better suited for the vehicle windshield on its right side, thereby improving the tightness of the fit.

The sixth straight section AB is the line connecting the third coordinate point (u0 - w/2, 0) and the fourth coordinate point (u0 - w/2, w0), where w0 is the thickness of the curved arm, and u0 is the width of the U-shaped region of the profiled U-shaped groove.

Specifically, in this embodiment, the sixth straight section is vertically oriented, so its x-coordinate remains consistent. Additionally, it is a line segment in the vertical direction, with the starting point at 0 on the y-axis and the endpoint at w0. By adjusting the values of the parameters w0 and u0, the starting point of the line can be modified, allowing for adjustments to the shape and position of the straight section.

The curve fitting formula for the seventh curve section BC is: $Y7 = \sin(x - (w + u0)) + 3w0/2 + x^{-1}$.

Specifically, in this embodiment, the seventh curve section is part of the second straight arm. A sine function is used to represent the undulating changes of the curve. The value of x is negative, indicating that the curve lies to the left of the origin. By adjusting the values of the parameters w, u0, and w0, the degree of undulation and the horizontal shift of the curve can be modified.

The curve fitting formula for the eighth curve section CD is: $Y8 = \log_{0.1}(x - (w + 3 \times u0/4)) + w0 + p0/2 + x^3$.

Specifically, in this embodiment, the eighth curve section is fitted using a logarithmic function combined with a cubic function. When the ventilation cover moves downward, the force point D in the eighth curve section follows the downward movement, causing its shape to change. This embodiment achieves effective balance of the force exerted by the ventilation cover through the interaction between the eighth and ninth curve sections. By compressing the eighth curve section and elongating the ninth curve section, the contact area between the ventilation cover and the ninth curve section increases, thus balancing the pressure caused by the downward movement of the ventilation cover, reducing wear, and extending the service life.

Specifically, the eighth curve section is part of the second straight arm. The logarithmic function is used to create changes in the shape of the curve. According to the formula $\log 0.1(x - (w + 3 \times u0/4))$, the value of the x-coordinate is the logarithm of $x - (w + 3 \times u0/4)$, while $w0 + p0/2$ represents a vertical translation of the curve. By adjusting the values of the parameters w, u0, w0, and p0, the shape, position, and vertical shift of the curve can be modified.

The curve fitting formula for the ninth curve section DE is: $Y9 = \log 2(x - (w + 3 \times u0/4)) + w0 + p0/2 + x^{1/3}$.

Specifically, in this embodiment, the ninth curve section is fitted using a logarithmic function and a cube root function. When the ventilation cover moves upward, the length of the ninth curve section compresses, while the length of the eighth curve section extends. This allows the space formed between the ninth curve section and the soft rubber profiled member to better accommodate the structure of the ventilation cover, improving the efficiency of the engagement.

Specifically, the ninth curve section is part of the second straight arm. The logarithmic function is used to create changes in the shape of the curve. According to the formula $\log 2(x - (w + 3 \times u0/4))$, the value of the x-coordinate is the base-2 logarithm of $x - (w + 3 \times u0/4)$, while $w0 + p0/2$ vertically translates the curve. By adjusting the values of the parameters w, u0, w0, and p0, the shape, position, and vertical shift of the curve can be modified. Compared to the eighth curve section, the base-2 logarithmic function of the ninth curve section may result in a steeper curve, aligning more closely with the actual shapes of the eighth and ninth curve sections and providing a more precise description of the curve.

The linear fitting formula for the tenth straight section EK is: $Y10 = p0/u0 \times x + h1$.

Specifically, the slope of this line is $p0/u0$, representing the degree of inclination of the line. The value h1 represents the y-intercept, determining the line's position on the y-axis. By adjusting the values of the parameters p0 and u0, the inclination and the vertical position of the line can be adjusted. When the value of $p0/u0$ is larger, the slope is steeper, indicating a greater degree of inclination. When the value of h1 is larger, the line's position on the y-axis is higher. Adjusting these parameters allows for precise and efficient fitting of the shape of the tenth straight section, improving the accuracy and efficiency of the fitting process.

Specifically, this embodiment achieves multi-point force application and contact through the setting of force point D and multiple contact points, increasing force distribution and balance, thereby improving the stability and reliability of the fit. The contact curve between the second straight arm and the horizontal body is described as the fourth curve section, while the curve between the second straight arm and the windshield is described as the fifth curve section, giving the straight arm a specific bending shape during the fitting process to meet particular fitting requirements. By providing the curve fitting formulas for the fourth curve section, fifth curve section, sixth straight section, seventh curve section, eighth curve section, ninth curve section, and tenth straight section, the shapes and variations of the straight arm and its fitting are more accurately described and controlled, ensuring precise fit and performance. The sequential arrangement of the sixth straight section, seventh curve section, eighth curve section between connection point A and force point D, and the ninth curve section between force point D and contact starting point E, enhances the strength and stability of the connection.

Continuing with reference to Figure 4, as shown, the bending part includes a locking part contact section, and the horizontal body includes a glass contact section. The linear fitting formula for the locking part contact section is:

$$S10 = -3 \times h0/2 \times w0 \times u0 \times x + h1$$

The curve fitting formula for the glass contact section is:

$S20 = \tan(x - L/3) + t1 + t2 + p0/2 \times x$, where t1 is the thickness of the strip member, and t2 is the combined thickness of the windshield and the double-sided adhesive 300. Additionally, the contact area of the locking part contact section is related to the first angle $\alpha$. That is, the larger the first angle $\alpha$, the greater the contact area between the locking part contact section and the bending part. Moreover, the contact area of the glass contact section is related to the second angle $\beta$. The smaller the second angle $\beta$, the greater the contact area between the glass contact section and the horizontal body.

Specifically, this embodiment uses the linear fitting formula for the locking part contact section to more accurately describe and control the shape and variation of the locking part contact section, ensuring precise fitting and performance during the engagement process. By providing the curve fitting formula for the glass contact section, the shape and variation of the glass contact section are accurately described and controlled, ensuring precise contact and performance during the engagement process. By adding a locking part contact section on the bending part and a glass contact section on the horizontal body, more stable and reliable contact is achieved, improving the strength and stability of the fit.

Specifically, the area of the first soft body is smaller than that of the curved arm.

Specifically, in this embodiment, because the area of the first soft body is smaller than that of the curved arm, the amount of soft material required is reduced, thereby lowering material costs and conserving resources. The smaller area of the first soft body also occupies less space, making the overall assembly structure more compact, saving space, and facilitating installation and usage. Additionally, the smaller area results in less material mass, reducing the overall weight of the assembly structure, thereby improving transport and handling efficiency. The reduction in soft material use and overall weight also decreases production and transportation costs.

Specifically, the hardness of the soft rubber profiled member, the first soft body, and the buffer part are the same, and all are lower than the hardness of the strip member and the profiled U-shaped groove.

Specifically, in this embodiment, the soft rubber profiled member, the first soft body, and the buffer part have lower hardness, providing excellent cushioning and shock absorption, effectively reducing the transmission of vibrations and impacts throughout the assembly structure, thereby lowering noise and vibration levels. Due to the difference in hardness between the soft rubber profiled member, the first soft body, the buffer part, and the harder strip member and profiled U-shaped groove, these softer components can serve as fillers and compensators during the fitting process, improving the tightness and stability of the fit while reducing friction and wear between the mating parts. The lower hardness of the soft rubber profiled member, the first soft body, and the buffer part enhances comfort and safety. Moreover, using lower hardness materials reduces material costs and increases manufacturing efficiency and economic viability.

Specifically, the metal framework includes a first framework 71 and a second framework 72. The first framework is set within the first straight arm, the curved arm, and the strip member, and is continuous and uninterrupted. The second framework is set inside the second straight arm, and there is no connection between the first and second frameworks.

Specifically, in this embodiment, by placing the first framework inside the first straight arm, curved arm, and strip member while maintaining a continuous, uninterrupted structure, the stability of the assembly is enhanced, and the rigidity and resistance to deformation of the assembled parts are improved to withstand external forces and loads. Since the first framework is continuous, it can be manufactured and installed in sections, simplifying the manufacturing and assembly process, thereby improving production efficiency and quality control. The second framework is placed within the second straight arm and is not connected to the first framework, allowing it to move and adjust freely to meet fitting requirements and changes, thus enhancing the flexibility and adjustability of the assembly. By dividing the metal framework into the first and second frameworks, each placed in different components, a division of labor is achieved, allowing each framework to handle different functions and mechanical requirements during the fitting process.

Continuing with reference to Figure 6, in another embodiment of the present invention, the curved arm 20 and the first straight arm 10 and second straight arm 30, which are positioned at respective ends of the curved arm, are integrally formed using an arc transition. Additionally, the outer surface of the curved arm 20 is covered with the first soft body, and the length of the covering is the same as the length of the curved arm.

In conclusion, the technical solution of the present invention has been described in conjunction with the preferred embodiments shown in the drawings. However, it is easily understood by those skilled in the art that the scope of protection of the present invention is not limited to these specific embodiments. Under the premise of not departing from the principles of the present invention, equivalent modifications or substitutions of relevant technical features may be made by those skilled in the art, and these modified or substituted technical solutions will fall within the protection scope of the present invention.

The above description is only a preferred embodiment of the present invention and is not intended to limit the present invention. For those skilled in the art, the present invention may have various modifications and variations. Any modifications, equivalent substitutions, or improvements made within the spirit and principles of the present invention should be included within the protection scope of the present invention.

## Claims

1. A vehicle windshield clamping strip, **characterized by** comprising:

   a strip member;
   a profiled U-shaped groove, wherein the profiled U-shaped groove is provided at one end of the strip member and integrally formed with the strip member; the profiled U-shaped groove comprises a curved arm, and a first straight arm and a second straight arm arranged at respective ends of the curved arm; an inner side of the second straight arm is provided with an inclined surface having a smooth transition curve; the area enclosed by the smooth transition surface and the first straight arm clamps the ventilation cover; the inner side of the second straight arm is provided with a sharp protrusion, which is directed toward the bottom of the profiled U-shaped groove; the free end of the first straight arm is provided with an inward protruding part near the second straight arm; the protruding part is in contact with a locking part of the ventilation cover; and
   a soft rubber profiled member, wherein the soft rubber profiled member is provided at the top and inner side of the second straight arm to limit the ventilation cover; and the soft rubber profiled member is fixed to an outer side of the opening direction of the second straight arm; the soft rubber profiled member includes a horizontal body and a bending body integrally formed with the horizontal body, wherein the horizontal body is provided at the top of the second straight arm; one of bending parts of the bending body is connected to the horizontal body and fully contacts the inner side of the second straight arm; a main body of the another bending part extends outward from the second straight arm; both bending parts of the bending body are integrally formed; the horizontal body is horizontally arranged at the top of the second straight arm; one end of the horizontal body is in contact with the windshield;

the strip member and the profiled U-shaped groove are integrally formed; the soft rubber profiled member is fixedly connected to one branch of the profiled U-shaped groove so that the strip member, the profiled U-shaped groove, and the soft rubber profiled member are fixed as one unit during use.

2. The vehicle windshield clamping strip according to claim 1, **characterized in that** the highest point on the first straight arm forms the first force point H when in contact with the ventilation cover; the highest point of the protruding part is the second force point I when in contact with the locking part; the first straight arm is divided into a first curve section, second curve section, third curve section, and fourth straight section based on its shape; a two-dimensional rectangular coordinate system is established with the horizontal line at the bottom of the profiled U-shaped groove along the x-axis and the vertical position of the metal framework in the first straight arm along the y-axis, wherein:

the starting point of the first curve section is the first force point H; the endpoint is the external connection point G between the first straight arm and the curved arm; the curve fitting formula for the first curve section HG is: Y1 = sin(x + $\pi$/2) - logh0(x) + h0;
the starting point of the second curve section is the first force point H; the endpoint is the second force point I; the curve fitting formula for the second curve section HI is: Y2 = cos(x - 2/w) + log2(x) + h1;
the starting point of the third curve section is the second force point I; the endpoint is the connection point J between the protruding part and the second straight arm; the curve fitting formula for the third curve section IJ is: Y3 = tan(x + 5$\times$h0/6) + ln(x) - 3w/2;
the starting point of the fourth straight section is J; the endpoint is the internal connection point F between the first straight arm and the curved arm; the line segment for the fourth straight section JF is defined by the first coordinate point (w/2, 5$\times$h0/6) and the second coordinate point (w/2, (h1 - h0)/2);
wherein, h1 is the vertical length of the first straight arm in its normal state; w is the average thickness of the first straight arm along its extension direction; h0 is the length of the metal framework within the first straight arm.

3. The vehicle windshield clamping strip according to claim 2, **characterized in that** the tip of the sharp protrusion serves as the force point D during engagement with the locking part; the contact starting point between the second straight arm and the bending body is point E at the lowest point of the bending body in an unstressed state; the highest point of the bending body in an unstressed state is the contact endpoint K; the contact point between the second straight arm and the windshield is point L at the sharp transition facing the windshield; the lowest point on the outer side of the second straight arm is the external connection point M between the strip member and the second straight arm; the lowest point on the inner side of the second straight arm is the internal connection point A between the curved arm and the second straight arm; the highest point on the inner side of the curved arm is the endpoint B of the sixth curve section; the highest point of the sharp protrusion near the curved arm is the endpoint C of the seventh curve section;

the curve fitting formula for the fourth curve section KL is:

$$Y42 = \cos(x - L0/3) + 3\times h1/2 + \sqrt[3]{x}$$ ,

wherein L0 is the total length of the strip member and the profiled U-shaped groove;
the curve fitting formula for the fifth curve section LM is: Y5 = tan(x - (L0/3 + w/2)) + 3$\times$h1/2 - p0 + $x^{1/2}$;
a sixth straight section, a seventh curve section, and an eighth curve section are sequentially provided between the internal connection point A and the force point D; the sixth straight section AB is the line segment between the third coordinate point (u0 - w/2, 0) and the fourth coordinate point (u0 - w/2, w0); the curve fitting formula for the seventh curve section BC is: Y7 = sin(x - (w + u0)) + 3w0/2 + $x^{-1}$; the curve fitting formula for the eighth curve section CD is: Y8 = log0.1(x - (w + 3$\times$u0/4)) + w0 + p0/2 + $x^3$;
the curve fitting formula for the ninth curve section DE is: Y9 = log2(x - (w + 3 $\times$u0/4)) + w0 + p0/2 + $x^{1/3}$;
the linear fitting formula for the tenth straight section EK is: Y10 = p0/u0 $\times$ x + h1;
wherein, p0 is the thickness of the horizontal body; L0 is the total length of the strip member and the profiled U-shaped groove; u0 is the width of the U-shaped region of the profiled U-shaped groove; w0 is the thickness of the curved arm.

4. The vehicle windshield clamping strip according to claim 3, **characterized in that** the locking part contact section on the bending part has a linear fitting formula:

$$S10 = -3 \times h0/2 \times w0 \times u0 \times x + h1$$

5. The vehicle windshield clamping strip according to claim 4, **characterized in that** the horizontal body has a glass contact section with a curve fitting formula:

$$S20 = \tan(x - L/3) + t1 + t2 + p0/2 \times x;$$

wherein, t1 is the thickness of the strip member, and t2 is the thickness of the windshield and double-sided adhesive.

6. The vehicle windshield clamping strip according to claim 5, **characterized in that** the contact area of the locking part contact section is positively correlated with the first angle $\alpha$, which is the bending angle of the bending body.

7. The vehicle windshield clamping strip according to claim 6, **characterized in that** the contact area of the glass contact section is negatively correlated with the second angle $\beta$, which is the bending angle between the horizontal body and the vertical connecting part.

8. The vehicle windshield clamping strip according to claim 7, **characterized by** further comprising a first soft body, wherein the first soft body is provided on an outer side of the curved arm and is strip-shaped or strip-surfaced.

9. The vehicle windshield clamping strip according to claim 8, **characterized in that** a protruding part is provided on the outer side of the strip member, and the protruding part is integrally formed with the strip member.

10. The vehicle windshield clamping strip according to claim 9, **characterized in that** a buffer part is also provided at the free end of the protruding part, and the buffer part has the same thickness as the first soft body.

11. The vehicle windshield clamping strip according to claim 10, **characterized in that** the strip member and the profiled U-shaped groove are both provided with a metal framework, and the metal framework is embedded within the strip member and the profiled U-shaped groove.

12. The vehicle windshield clamping strip according to claim 11, **characterized in that** the metal framework comprises a first framework and a second framework, wherein the first framework is provided in the first straight arm, the curved arm, and the strip member, and is continuous and uninterrupted; the second framework is provided in the second straight arm, and the first and second frameworks are not connected.

13. The vehicle windshield clamping strip according to claim 8, **characterized in that** the area of the first soft body is smaller than that of the curved arm.

14. The vehicle windshield clamping strip according to claim 12, **characterized in that** the hardness of the soft rubber profiled member, the first soft body, and the buffer part is the same, and all are lower than the hardness of the strip member and the profiled U-shaped groove.

**Figure 1**

**Figure 2**

**Figure 3**

**Figure 4**

**Figure 5**

**Figure 6**

Europäisches
Patentamt
European
Patent Office
Office européen
des brevets

# EUROPEAN SEARCH REPORT

Application Number

EP 24 20 7488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/057660 A1 (ORTMULLER MICHAEL [DE] ET AL) 27 March 2003 (2003-03-27) | 1 | INV. B60J10/70 |
| A | * paragraph [0031]; figure 4 * ----- | 2-14 | |
| A | EP 3 950 395 A1 (HEBEI KELI AUTOMOBILE EQUIPMENT CO LTD [CN]) 9 February 2022 (2022-02-09) * paragraph [0006] * * paragraph [0029] - paragraph [0035]; figure 2 * ----- | 1,2 | |

TECHNICAL FIELDS
SEARCHED      (IPC)

B60J

The present search report has been drawn up for all claims

| Place of search | Date of completion of the search | Examiner |
|---|---|---|
| The Hague | 20 February 2025 | Salé, Yoann |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 20 7488

20-02-2025

| Patent document cited in search report | Publication date | Patent family member(s) | | | Publication date |
|---|---|---|---|---|---|
| US 2003057660 A1 | 27-03-2003 | AT | E320933 | T1 | 15-04-2006 |
| | | AU | 6392501 | A | 20-11-2001 |
| | | BR | 0111154 | A | 16-12-2003 |
| | | CN | 1429155 | A | 09-07-2003 |
| | | CZ | 13501 | U1 | 14-07-2003 |
| | | CZ | 20023183 | A3 | 15-01-2003 |
| | | DE | 20008555 | U1 | 17-08-2000 |
| | | EP | 1280675 | A1 | 05-02-2003 |
| | | ES | 2263622 | T3 | 16-12-2006 |
| | | JP | 3621919 | B2 | 23-02-2005 |
| | | JP | 2003532574 | A | 05-11-2003 |
| | | MX | PA02008121 | A | 06-09-2004 |
| | | PL | 358021 | A1 | 09-08-2004 |
| | | PT | 1280675 | E | 31-07-2006 |
| | | SK | 11712002 | A3 | 04-03-2003 |
| | | US | 2003057660 | A1 | 27-03-2003 |
| | | WO | 0185481 | A1 | 15-11-2001 |
| EP 3950395 A1 | 09-02-2022 | BR | 112022020868 | A2 | 13-12-2022 |
| | | CA | 3137039 | A1 | 02-12-2021 |
| | | EP | 3950395 | A1 | 09-02-2022 |
| | | ES | 2961661 | T3 | 13-03-2024 |
| | | JP | 7157495 | B2 | 20-10-2022 |
| | | JP | 2022533906 | A | 27-07-2022 |
| | | MY | 191799 | A | 15-07-2022 |
| | | PL | 3950395 | T3 | 08-04-2024 |
| | | US | 2022266769 | A1 | 25-08-2022 |
| | | ZA | 202210860 | B | 26-10-2022 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108778808 A